# EUROPEAN PATENT SPECIFICATION

(11) **EP 1 867 568 B1**
(45) Date of publication and mention of the grant of the patent: **12.09.2012**
(21) Application number: 07019406.3
(22) Date of filing: 22.09.2004
(51) Int. Cl.: B64D 13/00, F24F 13/04

(54) **Aircraft air conditioning system mixer with corrugations**
Klimaanlagemischer mit Wellen
Mixeur avec ondulations pour système d'air conditionné

(30) Priority: 22.09.2003 US 504671 P; 10.11.2003 US 705582
(43) Date of publication of application: 19.12.2007
(62) Divisional of application: 04784699.3
(73) Proprietor: Hamilton Sundstrand Corporation, Windsor Locks, CT 06096-1010 (US)
(72) Inventor: McColgan, Charles J., West Granby, CT 06090 (US); Haddad, Christopher G., Southwick, MA 01077 (US); Desmarais, Donald R., Jr., Westfield, MA 01085 (US); Zywiak, Thomas M., Suffield, CT 06078 (US)
(74) Representative: Booth, Catherine Louise

(56) References cited:
- EP-A- 0 326 950
- GB-A- 671 567
- US-A- 5 133 194
- US-A- 5 516 330
- US-A- 5 634 964
- US-A- 6 004 204

## Description

### TECHNICAL FIELD

The application claims priority to U. S. Provisional Application No. 60/504,671, which was filed on September 22, 2003.

The present invention relates to an aircraft air conditioning system mixer, and more particularly, this invention relates to a mixer for mixing air from an air conditioning pack and other air.

US 5,634,964, US 5,133,194, GB 671,567, US 6,004,204 and EP 0326950 disclose air handling units for handling airflows within air conditioning systems and air distribution systems.

US 5,634,964 discloses an aircraft air conditioning system mixer comprising
a first tube having a passage extending between an inlet and an outlet,
a second tube at least partially surrounding said first tube forming a cavity, said first tube having a wall
with a circumferential corrugation forming at least one lobe fluidly connecting said first tube and said cavity, said corrugation providing an opening facing said outlet.

Aircraft air conditioning systems provide conditioned air to the aircraft cabin and other locations throughout the aircraft. An aircraft air conditioning system pack takes fresh air from the exterior of the aircraft and conditions the air, for example by using an air cycle machine as is known in the art, for use throughout the aircraft.

The pack provides very cold air that must be mixed with recirculated air to provide to the aircraft cabin. For example, a mixer takes the conditioned air and mixes it with cabin circulation air, which is at a higher temperature than the conditioned air. The mixer is typically configured in a T-shape and occupies a large space. In the prior art, a large mixer is needed to achieve required mixing and to prevent the mixer from icing up, which results in a pressure drop in the mixer, decreased pack performance and ice particles being distributed into the cabin. As ice builds up and restricts the flow of conditioned air through the mixer, the air cycle machine (ACM) speed decreases reducing the ability of the pack to produce cold air. To address this problem, the prior art uses a mixer that is approximately the size of a 55 gallon drum. As the cold air from the pack mixes with humid recirculation air, the moisture in the recirculation air condenses and freezes causing ice to collect at the bottom of the mixer where it inhibits the flow of conditioned air through the mixer. Desirably, prior art mixers produce a uniform temperature of the mixed air at the outlet due to the large volume of the mixer.

Therefore, what is needed is a smaller mixer that is not subject to ice build up while producing a uniform mixed air outlet temperature.

### DISCLOSURE OF INVENTION

The present invention provides an air conditioning system mixer as set forth in claim 1. In the disclosed embodiment, the mixer includes a fresh air tube defining a passage having an inlet receiving conditioned air from an air conditioning pack. The fresh air tube includes an outlet providing mixed air to a cabin of the aircraft. An outer tube at least partially surrounds the fresh air tube and receives recirculated air from the cabin. The outlet of the fresh air tube is fluidly connected to the outlet of the recirculation air outer tube.

The warm recirculation air surrounds the portion of the fresh air tube to heat it preventing ice from forming. The warm recirculation air entering the fresh air tube through the lobes homogeneously mixes with the conditioned air from the pack to provide a uniform mixture of air at the outlet of the mixer. The fresh air tube includes circumferential corrugations forming peaks and valleys. The corrugations define the lobes connecting the outer tube to the fresh air tube. The corrugations have a sloped wall extending in a direction from the inlet to the outlet of the fresh air tube. The sloped wall and circumferential corrugations provide a uniform temperature at the mixed outlet of the mixer.

In applications where air is provided to a flight deck separately from the cabin, the mixer includes a flight deck supply tube that is arranged about an inner tube that is fluidly connected to the fresh air tube upstream of the holes. Trim air is fed into the flight deck supply tube and flows around the inner tube to heat the inner tube preventing ice build up.

Accordingly, the present invention provides a smaller mixer that is not subject to ice build up while producing a uniform mixed air outlet temperature.

These and other features of the present invention can be best understood from the following specification and drawings, the following of which is a brief description.

### BRIEF DESCRIPTION OF DRAWINGS

Figure 1 is a schematic view of the inventive aircraft air conditioning system with the inventive mixer.
Figure 2 is a front elevational view of the inventive mixer shown in Figure 1.

### BEST MODE FOR CARRYING OUT THE INVENTION

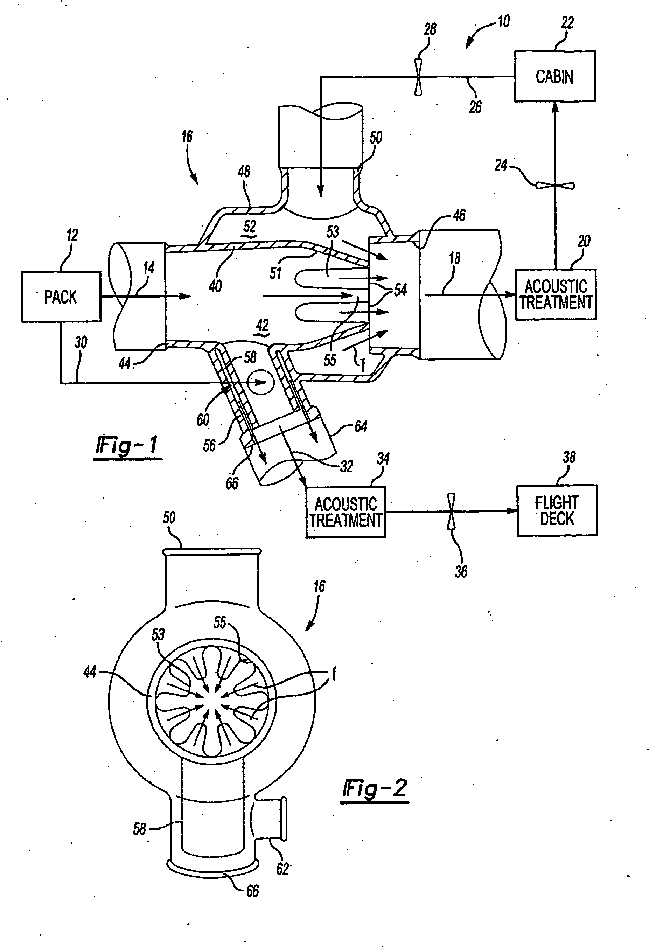

An inventive aircraft conditioning system 10 is shown schematically in Figure 1. The system 10 includes an air conditioning pack 12 that provides fresh conditioned air from an ACM. The pack 12 receives the fresh air from an engine bleed valve, or more preferably, an electrically driven supercharger.

Conditioned air 14 from the pack 12 flows into the inventive mixer 16. Mixed air 18 exits the mixer 16 and enters an acoustic treatment device 20 to reduce the noise. Once treated, the mixed air 18 is delivered to an aircraft cabin 22. Recirculation air 26 from the cabin 22 is returned to the mixer 16 by a fan 28 where it is mixed with the conditioned air 14 to obtain the mixed air 18 within a desired temperature range.

Some aircraft configurations require the delivery of air to an aircraft flight deck 38 that is separate from the air delivered to the cabin 22. For such applications, the mixer 16 receives trim air 30 from the pack 12 to mix with the conditioned air 14. The trim air 30 may be supplied from hot air upstream from the pack 12 and downstream from the engine or superchargers. The mixer 16 delivers conditioned air 32 to an acoustic treatment device 34 from which the conditioned air is delivered to the flight deck 38.

The inventive mixer 16 prevents ice from building up within the mixer which would reduce the efficiency of the pack while maintaining the uniform mixed air outlet temperature. The mixer 16 includes a fresh air tube 40 defining a passage 42 extending from an inlet 44 to an outlet 46. The inlet 44 receives conditioned air 14 from the pack 12. The outlet 46 delivers mixed air 18, which is a mixture of the conditioned air 14 and the recirculation air 26, to the acoustic treatment device 20.

An outer tube. 48 at least partially surrounds the fresh air tube 40 to form a cavity 52. During operation of the system 10, recirculation air 26 flows through a recirculation air inlet 50 into the cavity 52, filling the cavity 52 with warm recirculation air 26. The warm recirculation air 26 conducts heat into the fresh air tube 40, which raises the temperature of the fresh air tube 40 preventing ice from forming.

The wall of the fresh air tube 40 has circumferential corrugations forming lobes having peaks 53 and valleys 55. The circumferential corrugations may be integrally formed with the rest of the mixer 16, or may be formed by inserting a separate structure within the passage 42. Multiple lobes 54 are arranged circumferentially about the exit of the fresh air tube 40 to fluidly connect the fresh air tube 40 with the cavity 52. The warm recirculation air 26 flows from the cavity 52 through the lobes 54 into the passage 42 where it homogeneously mixes with the conditioned air 14 producing mixed air 18 having a uniform temperature.

The fresh air tube 40 has a sloped wall 51 sloping inwardly from the inlet side of the mixer 16 toward the outlet side. The gently sloping wall 51 creates a flow path for the recirculation air 26 to mix with the conditioned air 14. The peaks 53 and valleys 55 provide an increased surface area to increase the heat transfer through the wall of the fresh air tube 40 from the warm recirculation air 26. The uniform temperature of the mixed air 18 prevents cold spots within the mixer 16 that could permit ice formation.

For applications having a separate air supply for the flight deck 38, the mixer 16 includes a flight deck supply tube 56 extending from the body of the mixer 16. An inner tube 58 extends at an angle from the fresh air tube 40 and is arranged within the flight deck supply tube 56. The angle is less than 90° to enhance flow from the passage 42 to the inner tube 58. The passage 42 is larger in diameter than the inner tube 58 as the cabin 22 requires considerably more air flow than the flight deck 38. The tubes 56 and 58 are spaced from one another to form a cavity 60. Preferably, the lobes 54 are arranged downstream from the inner tube 58 so that the recirculation air 26 does not mix with air to the flight deck 38.

Referring to Figures 1 and 2, a trim air tube 62 extends from a side of the flight deck supply tube 56 to deliver the trim air 30 to the cavity 60. The hot trim air 30 within the cavity 60 conducts heat into the wall of the inner tube 58 preventing ice from building up on this wall. The trim air and conditioned air meet and begin to mix at the end of the inner tube 58. As with the other inlets and outlets of the mixer 16, a duct 64 is connected to an outlet 66 of the flight deck supply tube 56 by clamps. The trim air and conditioned air may continue to mix within the duct 64.

The mixer 16 may be cast or molded from any suitable material. The inventive mixer is considerably smaller than prior art mixers, approximately nine inches in diameter and 2 ft. x 2 ft. x 2 ft. in volume, without compromising performance and reliability. Moreover, the inventive mixer is much lighter than prior art mixers.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. An aircraft air conditioning system mixer (16) comprising:
a first tube (40) having a passage (42) extending between an inlet (44) and an outlet (46);
a second tube (48) at least partially surrounding said first tube (40) forming a cavity (52), said first tube (40) having a sloped wall (51) sloping inwardly from an inlet side of the mixer (16) toward an outlet side of the mixer (16), said wall (51) having a circumferential corrugation forming at least one lobe (54) fluidly connecting said first tube (40) and said cavity (52), said corrugation providing an opening facing said outlet (46); and
a flight deck supply tube (56) extending from the mixer (16).

2. The mixer (16) according to claim 1, wherein said inlet (44) is a conditioned air inlet for receiving conditioned air from a pack (12).

3. The mixer (16) according to claim 2, wherein said second tube (48) includes a recirculation air inlet (50) for receiving recirculation air from an aircraft cabin (22), and said outlet (46) for delivering mixed air to the cabin (22).

4. The mixer (16) according to claim 2, wherein the flight deck supply tube (56) extends from said mixer (16) with an inner tube (58) extending from said first tube (40) and fluidly connected therewith, said inner tube (58) arranged at least partially within said flight deck supply tube (56), forming another cavity (60) between said inner tube (58) and said flight deck supply tube (56), said another cavity (60) for receiving trim air from the pack (12).

5. The mixer (16) according to claim 4, wherein said inner tube (58) is arranged between said at least one lobe (54) and said inlet (44).

6. The mixer (16) according to claim 1, wherein multiple lobes (54) are arranged about a circumference of said first tube (40) with said lobes (54) fluidly connecting said cavity (52) and said passage (42).

7. The mixer (16) according to claim 6, wherein said lobes (54) comprise peaks (53) and valleys (55) defined by said sloped wall (51) sloping from the inlet side toward the outlet side.

8. The mixer (16) according to any preceding claim, further comprising an exit tube fluidly connected to said passage (42) between said inlet (44) and said outlet (46).

9. An aircraft air conditioning system (10) comprising:
a pack (12) producing conditioned air;
a cabin (22) providing recirculation air; and
a mixer (16) as claimed in any preceding claim.

10. The system (10) according to claim 9 when dependent upon claim 3, wherein the recirculation air is hotter than the conditioned air, the recirculation air heating the mixer (16) and conditioned air preventing ice formation within said mixer (16).

## Patentansprüche

1. Flugzeug-Klimaanlagenmischer (16), aufweisend:
ein erstes Rohr (40) mit einer Passage (42), die sich zwischen einem Einlass (44) und einem Auslass (46) erstreckt;
ein zweites Rohr (48), das das erste Rohr (40) unter Bildung eines Hohlraums (52) zumindest teilweise umschließt, wobei das erste Rohr (40) eine geneigte Wand (51) aufweist, die von einer Einlassseite des Mischers (16) in Richtung zu einer Auslassseite des Mischers (16) nach innen geneigt ist, wobei die Wand (51) eine in Umfangsrichtung verlaufende Wellung aufweist, die mindestens einen Bogenbereich (54) bildet, der das erste Rohr (40) und den Hohlraum (52) in Fluidverbindung miteinander bringt, wobei die Wellung eine dem Auslass (46) zugewandte Öffnung schafft; und
ein Cockpit-Versorgungsrohr (56), das sich von dem Mischer (16) weg erstreckt.

2. Mischer (16) nach Anspruch 1,
wobei der Einlass (44) ein Einlass für klimatisierte Luft ist, um klimatisierte Luft von einem Klimaaggregat (12) zu empfangen.

3. Mischer (16) nach Anspruch 2,
wobei das zweite Rohr (48) einen Rezirkulationsluft-Einlass (50) zum Empfangen von Rezirkulationsluft von einer Flugzaugkabine (22) sowie den Auslass (46) zum Zuführen von Mischluft zu der Kabine (22) aufweist.

4. Mischer (16) nach Anspruch 2,
wobei sich das Cockpit-Versorgungsrohr (56) von dem Mischer (16) weg erstreckt und sich ein inneres Rohr (58) von dem ersten Rohr (40) weg erstreckt und mit diesem in Fluidverbindung steht, wobei das innere Rohr (58) zumindest teilweise innerhalb des Cockpit-Versorgungsrohrs (56) angeordnet ist, so dass ein weiterer Hohlraum (60) zwischen dem inneren Rohr (58) und dem Cockpit-Versorgungsrohr (56) gebildet ist, wobei der weitere Hohlraum (60) zum Empfangen von Zapfluft von dem Aggregat (12) dient.

5. Mischer (16) nach Anspruch 4,
wobei das innere Rohr (58) zwischen dem mindestens einen Bogenbereich (54) und dem Einlass (44) angeordnet ist.

6. Mischer (16) nach Anspruch 1,
wobei mehrere Bogenbereiche (54) um einen Umfang des ersten Rohrs (40) herum angeordnet sind, wobei die Bogenbereiche (54) den Hohlraum (52) und die Passage (42) in Fluidverbindung miteinander bringen.

7. Mischer (16) nach Anspruch 6,
wobei die Bogenbereiche (54) Erhebungen (53) und Täler (55) aufweisen, die durch die geneigte Wand (51) gebildet sind, die sich von der Einlassseite in Richtung auf die Auslassseite erstrecken.

8. Mischer (16) nach einem der vorausgehenden Ansprüche,
weiterhin mit einem Austrittsrohr in Fluidverbindung mit der Passage (42) zwischen dem Einlass (44) und dem Auslass (46).

9. Flugzeug-Klimaanlagensystem (10), aufweisend:
ein Aggregat (12), das klimatisierte Luft erzeugt,
eine Kabine (22), die Rezirkulationsluft bereitstellt; und
einen Mischer (16) nach einem der vorausgehenden Ansprüche.

10. System (10) nach Anspruch 9 bei Abhängigkeit von Anspruch 3, wobei die Rezirkulationsluft heißer ist als die klimatisierte Luft, wobei die Rezirkulationsluft den Mischer (16) erwärmt und klimatisierte Luft Eisentstehung in dem Mischer (16) verhindert.

## Revendications

1. Mélangeur (16) de système de conditionnement d'air d'aéronef, comprenant :
un premier tube (40) comportant un passage (42) s'étendant entre une entrée (44) et une sortie (46) ;
un deuxième tube (48) entourant au moins partiellement ledit premier tube (40) en formant une cavité (52), ledit premier tube (40) présentant une paroi inclinée (51) s'inclinant vers l'intérieur depuis un côté entrée du mélangeur (16) en direction d'un côté sortie du mélangeur (16), ladite paroi (51) présentant une ondulation circonférentielle formant au moins un lobe (54) raccordant fluidiquement ledit premier tube (40) et ladite cavité (52), ladite ondulation fournissant une ouverture en regard de ladite sortie (46) ; et
un tube d'alimentation de poste de pilotage (56) s'étendant depuis le mélangeur (16).

2. Mélangeur (16) selon la revendication 1, ladite entrée (44) étant une entrée d'air conditionné servant à recevoir de l'air conditionné provenant d'un groupe de conditionnement d'air (12).

3. Mélangeur (16) selon la revendication 2, ledit deuxième tube (48) comportant une entrée d'air de recirculation (50) servant à recevoir de l'air de recirculation provenant d'une cabine (22) d'aéronef, et ladite sortie (46) servant à fournir de l'air mélangé à la cabine (22).

4. Mélangeur (16) selon la revendication 2, le tube d'alimentation de poste de pilotage (56) s'étendant depuis ledit mélangeur (16) avec un tube intérieur (58) s'étendant depuis ledit premier tube (40) et raccordé fluidiquement avec lui, ledit tube intérieur (58) étant agencé au moins partiellement à l'intérieur dudit tube d'alimentation de poste de pilotage (56) en formant une autre cavité (60) entre ledit tube intérieur (58) et ledit tube d'alimentation de poste de pilotage (56), ladite autre cavité (60) servant à recevoir de l'air d'équilibrage provenant du groupe de conditionnement d'air (12).

5. Mélangeur (16) selon la revendication 4, ledit tube intérieur (58) étant agencé entre ledit au moins un lobe (54) et ladite entrée (44).

6. Mélangeur (16) selon la revendication 1, plusieurs lobes (54) étant agencés sur une circonférence dudit premier tube (40), lesdits lobes (54) raccordant fluidiquement ladite cavité (52) et ledit passage (42).

7. Mélangeur (16) selon la revendication 6, lesdits lobes (54) comprenant des crêtes (53) et des creux (55) définis par ladite paroi inclinée (51) s'inclinant depuis le côté entrée en direction du côté sortie.

8. Mélangeur (16) selon l'une quelconque des revendications précédentes, comprenant en outre un tube de sortie raccordé fluidiquement audit passage (42) entre ladite entrée (44) et ladite sortie (46).

9. Système (10) de conditionnement d'air d'aéronef, comprenant :
un groupe de conditionnement d'air (12) produisant de l'air conditionné ;
une cabine (22) fournissant de l'air de recirculation ; et
un mélangeur (16) selon l'une quelconque des revendications précédentes.

10. Système (10) selon la revendication 9, si celle-ci dépend de la revendication 3, l'air de recirculation étant plus chaud que l'air conditionné, l'air de recirculation chauffant le mélangeur (16) et l'air conditionné empêchant le givrage de l'intérieur dudit mélangeur (16).
